# EUROPÄISCHE PATENTSCHRIFT

(11) **EP 0 841 116 B1**
(45) Veröffentlichungstag und Bekanntmachung des Hinweises auf die Patenterteilung: **16.05.2007**
(21) Anmeldenummer: 97114888.7
(22) Anmeldetag: 28.08.1997
(51) Int. Cl.: B23D 37/00, B24D 5/06, B24B 19/12

(54) **Verfahren zum Bearbeiten von rotationssymmetrischen Werkstückflächen sowie Werkzeug zur Durchführung eines solchen Verfahrens**
Working method for rotational symmetric workpiece surfaces and tool therefor
Méthode de travail de surfaces de pièces symétriques en rotation et outil employé

(30) Priorität: 19.10.1996 DE 19643192
(43) Veröffentlichungstag der Anmeldung: 13.05.1998
(73) Patentinhaber: Gebr. Heller Maschinenfabrik GmbH, D-72622 Nürtingen (DE)
(72) Erfinder: Weidmann, Hans, 72622 Nürtingen (DE); Bertschinger, Wolfgang, 72622 Nürtingen (DE); Faigle, Bernd, 72829 Engstingen (DE)
(74) Vertreter: Kohl, Karl-Heinz

(56) Entgegenhaltungen:
- EP-A- 0 286 771
- EP-A- 0 417 446
- EP-A- 0 542 026
- DE-A- 3 525 514
- DE-C- 4 119 162
- FR-A- 2 190 037
- US-A- 2 195 050

## Beschreibung

Die Erfindung betrifft ein Verfahren zum Bearbeiten von rotationssymmetrischen Werkstückflächen nach dem Oberbegriff des Anspruches 1.

Bei der Bearbeitung von Haupt- und Hublagern von Kurbelwellen ist es bekannt, beispielsweise Einschnitte am Übergang zwischen den Zapfen und den Wangen der Kurbelwelle durch Einstechdrehen zu bearbeiten, während die zylindrische Zapfenfläche durch Drehräumen bearbeitet wird. Bei diesem bekannten Verfahren wird das Werkzeug nach dem Einstechdrehen vom Werkstück zurückgezogen und anschließend um seine Achse gedreht, um die Drehräumbearbeitung vorzunehmen. Diese Verfahrensweise ist wegen des Zurückziehens des Werkzeuges vom Werkstück zeitaufwendig.

Es ist auch eine Kurbelwellenbearbeitung bekannt (EP 0 417 446 A), bei dem die Werkstückfläche durch Drehräumen bearbeitet wird. Das Werkzeug und das Werkstück drehen während der Bearbeitung um zueinander parallele Achsen. Die Drehräumschneide des Werkzeuges bewegt sich bei der , Drehräumbearbeitung quer zur Werkstückachse. Bei längeren Bearbeitungszeiten kann die Schneidkante der Drehräumschneide Ausbrüche aufweisen, die zu Überhöhungen in der Werkstückfläche führen.

Der Erfindung liegt die Aufgabe zugrunde, das gattungsgemäße Verfahren so auszubilden, daß das Werkstück bei kurzen Bearbeitungszeiten mit hoher Qualität und Genauigkeit bearbeitet werden kann.

Diese Aufgabe wird beim gattungsgemäßen Verfahren erfindungsgemäß mit den kennzeichnenden Merkmalen des Anspruches 1 gelöst.

Beim erfindungsgemäßen Verfahren wird bei kurzen Bearbeitungszeiten eine optimale Oberflächenqualität am Werkstück erreicht. Die bei längeren Bearbeitungszeiten an der Schneidkante der Drehräumschneide zwangsläufig auftretenden Ausbrüche, die beim herkömmlichen Verfahren zu Überhöhungen in der rotationssymmetrischen Werkstückfläche führen, werden durch die der tangentialen Vorschubbewegung überlagerten Korrekturbewegung abgetragen, so daß trotz der an der Schneidenkante der Drehräumschneide vorhandenen Ausbrüche eine hervorragende Oberflächenqualität und Genauigkeit erzielt wird. Infolge der axialen Korrekturbewegung kommen nicht beschädigte Teilbereiche der Schneidenkante in den Bereich der durch die Ausbrüche an der Schneidenkante an der Werkstückfläche erzeugten Überhöhungen und arbeiten sie ab. Dadurch ergibt sich eine hohe Oberflächenqualität des Werkstückes bei kurzer Bearbeitungszeit. Darüber hinaus hat die erfindungsgemäße Verfahrensweise den Vorteil, daß mit einer relativ schmalen Drehräumschneide breite Werkstückflächen bearbeitet werden können.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung einen Teil einer Werkzeugträgerscheibe, die am Umfang mit Werkzeughaltern versehen ist,
- Fig. 2: die Werkzeughalter gemäß Fig. 1 in Ansicht,
- Fig. 3: in schematischer Darstellung die Bearbeitung eines Zapfens einer Kurbelwelle mittels Schneiden der Werkzeughalter gemäß Fig. 2,
- Fig. 4: in schematischer Darstellung den Verfahrensablauf zum Einstechdrehen und Drehräumen einer rotationssymmetrischen Werkstückfläche,
- Fig. 5: in schematischer Darstellung eine Schneide mit Ausbrüchen in der Schneidkante sowie die zugehörige bearbeitete Werkstückfläche,
- Fig. 6: in schematischer Darstellung den Verfahrensablauf beim Drehräumen einer rotationssymmetrischen Werkstückfläche mit einer Schneide, deren Schneidkante Ausbrüche aufweist,
- Fig. 7: in Ansicht einen Teil eines Werkzeughalters mit einem austauschbaren Schneidkörper,
- Fig. 8: in einer Darstellung entsprechend Fig. 7 einen Werkzeughalter mit zwei austauschbaren Schneidkörpern,
- Fig. 9: in einer Darstellung entsprechend Fig. 3 einen Werkzeughalter, der mit einer standardisierten Schneidkörper-Katalog-Wendeschneidplatte versehen ist.

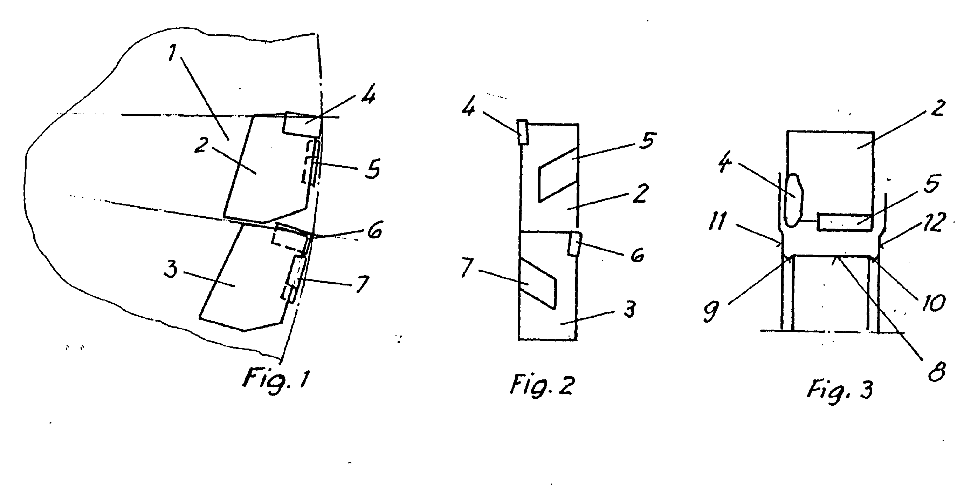

Fig. 1 zeigt einen Teil eines scheibenförmigen Werkzeugträgers 1, an dessen Umfang Werkzeughalter 2 und 3 befestigt sind. Da solche Werkzeugträger mit Werkzeughaltern an sich bekannt sind, werden sie nicht näher erläutert. Der Werkzeughalter 2 hat zwei Schneiden 4 und 5, während der Werkzeughalter 3 mit zwei Schneiden 6 und 7 versehen ist. Mit den Schneiden 4, 6 wird in noch zu beschreibender Weise an einer rotationssymmetrischen Werkstückfläche 8 (Fig. 3) jeweils ein Einstich 9 bzw. 10 hergestellt. Im Ausführungsbeispiel ist die rotationssymmetrische Werkstückfläche 8 die Mantelfläche eines Zapfens einer Kurbelwelle. Selbstverständlich kann die rotationssymmetrische Werkstückfläche auch an anderen Werkstücken, wie Nockenwellen, Stangen und dergleichen vorgesehen sein.

Mit den Schneiden 5 und 7 wird die rotationssymmetrische Werkstückfläche in noch zu beschreibender Weise bearbeitet.

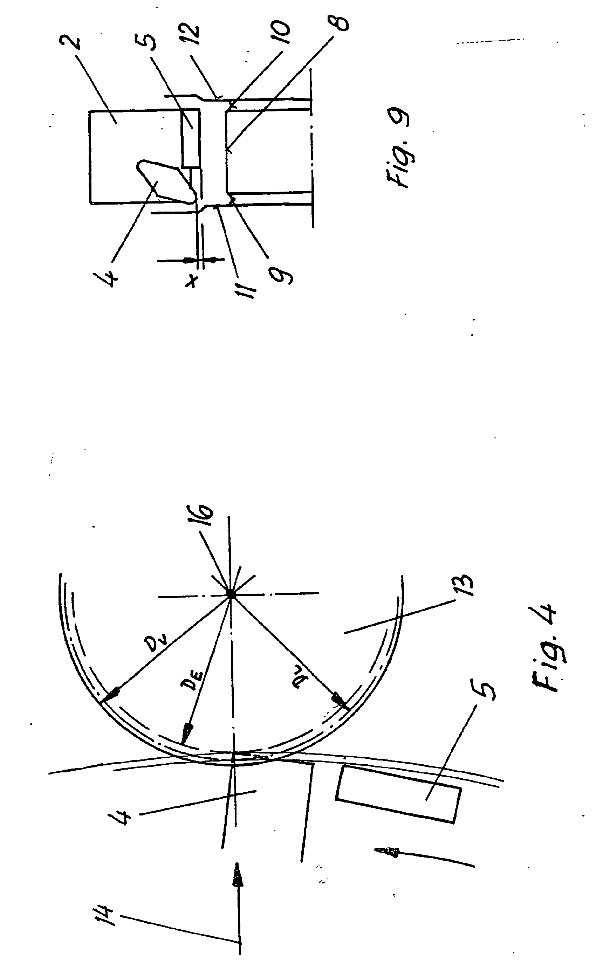

Die Einstiche 9, 10, die bei einer Kurbelwelle am Übergang vom Zapfen zu den Seitenwangen 11 und 12 vorgesehen sind, werden mit den Schneiden 4, 6 der Werkzeughalter 2, 3 mittels Einstechdrehen hergestellt. Hierbei wird die Schneide 4, 6 mit Vorschubgeschwindigkeit linear radial gegen das rotierende Werkstück 13 bewegt. In Fig. 4 ist dies beispielhaft für die Schneide 4 des Werkzeughalters 2 dargestellt. Die Schneide 4 bzw. der Werkzeughalter 2 wird in Pfeilrichtung 14 radial linear gegen das rotierende Werkstück 13 bewegt. Mit der jeweiligen Schneide 4 bzw. 6 wird auf diese Weise der Einstich 9 bzw. 10 erzeugt.

Sobald der gewünschte Einstichdurchmesser erreicht ist, wird der lineare radiale Vorschub gestoppt und der Werkzeugträger 1 um seine Achse gedreht. Dadurch kommt die gegenüber der Schneide 4, 6 in Umfangsrichtung des Werkzeugträgers 1 versetzte Schneide 5 bzw. 7 mit dem Werkstück 13 bzw. dessen Zylinderfläche 8 in Eingriff. Hierbei wird die Werkstückfläche 8 mit der Schneide 5 bzw. 7 im Drehräumverfahren bearbeitet, bei dem das Werkstück 13 mit Schnittgeschwindigkeit und der Werkzeugträger 1 mit Vorschubgeschwindigkeit um ihre zueinander parallelen Achsen gedreht werden. Zwischen dem Einstechdrehen und dem Drehräumen ist eine radiale Relativbewegung zwischen Werkstück 13 und Werkzeug 1 nicht vorgesehen. Vielmehr wird nach Beendigung des Einstechdrehens der radiale Vorschub 14 gestoppt und auf den Rundvorschub des Werkzeugträgers 1 umgeschaltet.

Wie sich aus Fig. 4 ergibt, hat der Einstich 9, 10 den Durchmesser D_{E}, während die rotationssymmetrische Werkstückfläche 8 den Durchmesser D_{L} hat. Die Schneide 5 bzw. 7 ist um die halbe Differenz des Lagerdurchmessers und des Einstichdurchmessers D_{E} im Werkzeugradius gegenüber der Schneide 4 bzw. 6 zurückgesetzt. Darum ist beim Umschalten auf den Drehräumvorgang eine radiale relative Vorschubbewegung zwischen Werkzeug und Werkstück nicht notwendig.

Mit der Schneide 5 bzw. 7 wird das von der Vorbearbeitung definierte Aufmaß (D_{V} - D_{E})/2 abgenommen und damit der gewünschte Bearbeitungsdurchmesser erzeugt. D_{V} ist der Durchmesser der Werkstückfläche 8 nach der Vorbearbeitung.

Die Schneiden 5, 7 sind im dargestellten Ausführungsbeispiel größer als die halbe axiale Breite der zu bearbeitenden rotationssymmetrischen Werkstückfläche 8. Zur kompletten Fertigbearbeitung dieser Werkstückfläche 8 ist somit die Bearbeitung durch zwei spiegelbildlich ausgeführte Werkzeughalter 2, 3 erforderlich. Wie sich aus den Fig. 1 und 2 ergibt, wird mit den Schneiden 4, 5 des Werkzeughalters 2 zunächst der eine Teil der Werkstückfläche 8 im Einstechdreh- sowie im Drehräumverfahren in der beschriebenen Weise bearbeitet. Anschließend wird der Werkzeugträger 1 radial relativ zum Werkstück 13 linear zurückgefahren und dann um seine Achse so weit gedreht, bis die Schneide 6 des nachfolgenden Werkzeughalters 3 auf der Verbindungsgeraden zwischen den beiden Achsen des Werkzeugträgers 1 und des Werkstückes 13 liegt. Dann wird der Werkzeugträger 1 in der beschriebenen Weise in Vorschubrichtung 14 radial linear gegen das um seine Achse 16 rotierende Werkstück 13 bewegt, wobei mit der Schneide 6 im Einstechdrehverfahren der Einstich 10 am Werkstück 13 erzeugt wird. Sobald der gewünschte Durchmesser des Einstiches 10 erreicht ist, wird die Vorschubbewegung des Werkzeugträgers 1 gestoppt und unmittelbar anschließend der Werkzeugträger 1 um seine Achse gedreht, so daß die Schneide 7 nunmehr den anderen Teil der Werkstückfläche 8 im Drehräumverfahren bearbeiten kann, bei dem das Werkstück 13 in bekannter Weise um seine Achse 16 gedreht wird.

Mit dem beschriebenen Werkzeug 1 sowie dem beschriebenen Verfahren ergeben sich sehr kurze Bearbeitungszeiten, weil das Werkzeug 1 unmittelbar im Anschluß an das Einstechdrehen nicht vom Werkstück 13 abgehoben werden muß, sondern lediglich um seine Achse weiter gedreht wird, bis die nächste Schneide 5, 7 am Werkstück 13 in Eingriff gelangt. Mit den beiden Werkzeughaltern 2, 3 können die beiden Einstiche 9, 10 sowie die zylindrische Mantelfläche 8 bearbeitet werden. Bei herkömmlichen Werkzeugträgern sind hierfür mindestens drei Werkzeughalter erforderlich. Da zur Komplettbearbeitung beispielsweise eines Lagerzapfens einer Kurbelwelle nur zwei Werkzeughalter 2, 3 erforderlich sind, kann der Werkzeugträger 1 mit Schwesterwerkzeugen bestückt werden, wodurch eine höhere Gesamtstandzeit der Werkzeuge erreicht wird. Dadurch sind Werkzeugwechsel nur in größeren Zeitintervallen erforderlich, wodurch eine wesentlich höhere Maschinenverfügbarkeit wegen der geringeren Stillstandzeiten erreicht wird. Da die Schneiden 4, 5 bzw. 6, 7 innerhalb des jeweiligen Werkzeughalters 2, 3 mit kleinsten Toleranzen hinsichtlich ihrer Lage zueinander eingebaut werden können, treten allenfalls nur minimale Abweichungen zwischen dem Lagerdurchmesser D_{L} und dem Einstechdurchmesser D_{E} auf.

Durch eine geeignete Einstell- oder Abstimmöglichkeit einer der beiden Schneiden 4, 5 bzw. 6, 7 innerhalb des jeweiligen Werkzeughalters 2 bzw. 3 können Fertigungstoleranzen von Werkzeughalter 2, 3 und/oder der jeweiligen Schneidplatte 4, 5 bzw. 6, 7 eliminiert werden. Die Schneiden sind vorteilhaft Wendeschneidplatten.

Beim Ausführungsbeispiel nach den Fig. 1 bis 4 ist die Schneide 4 als Formschneidkörper ausgebildet. Fig. 9 zeigt ein Ausführungsbeispiel, bei dem der Werkzeughalter 2 anstelle des Formschneidkörpers 4 eine standardisierte Schneidkörper-Katalog-Wendeschneidplatte 4 aufweist. Sie ist derart schräg am Werkzeughalter 2 vorgesehen, daß mit ihr die Seitenwangen sowie die Einstiche 9, 10 an der Kurbelwelle bearbeitet bzw. hergestellt werden können. Um die planen Seitenwangen 11, 12 der Kurbelwelle zu bearbeiten, wird der Werkzeugträger mit dem Werkzeughalter 2 linear radial in Richtung auf die Kurbelwelle bewegt. Hierbei wird zunächst die jeweilige Seitenwange bearbeitet. Ab dem Übergangspunkt von der Seitenwange 11, 12 zum Radius des Einstiches 9, 10 wird der Werkzeugträger mittels zweier NC-Achsen (radial und axial) gesteuert bewegt. Dadurch wird die Form des Einstiches 9, 10 erzeugt.

Nach dem Austritt der Schneide 4 aus dem Werkstück an der von der Seitenwange 11, 12 abgewandten Seite werden die beiden Vorschubachsen stillgesetzt. Unmittelbar anschließend wird der Werkzeugträger um seine Achse gedreht, so daß die axial hinter der Einstichschneide 4 angeordnete Drehräumschneide 5 am Werkstück zum Eingriff kommt. Mit der Schneide 5 wird dann in der beschriebenen Weise die rotationssymmetrische Werkstückfläche 8 im Drehräumverfahren bearbeitet, bei dem der Werkzeugträger und das Werkstück um ihre zueinander parallelen Achsen drehen. Die Drehräumschneide 5 ist gegenüber der Einstichschneide 4 im Werkzeugradius um das abzutragende Aufmaß am Werkstück sowie um den für den Freigang x der Einstichschneide 4 zum Werkstück erforderlichen Abstand vorgesetzt.

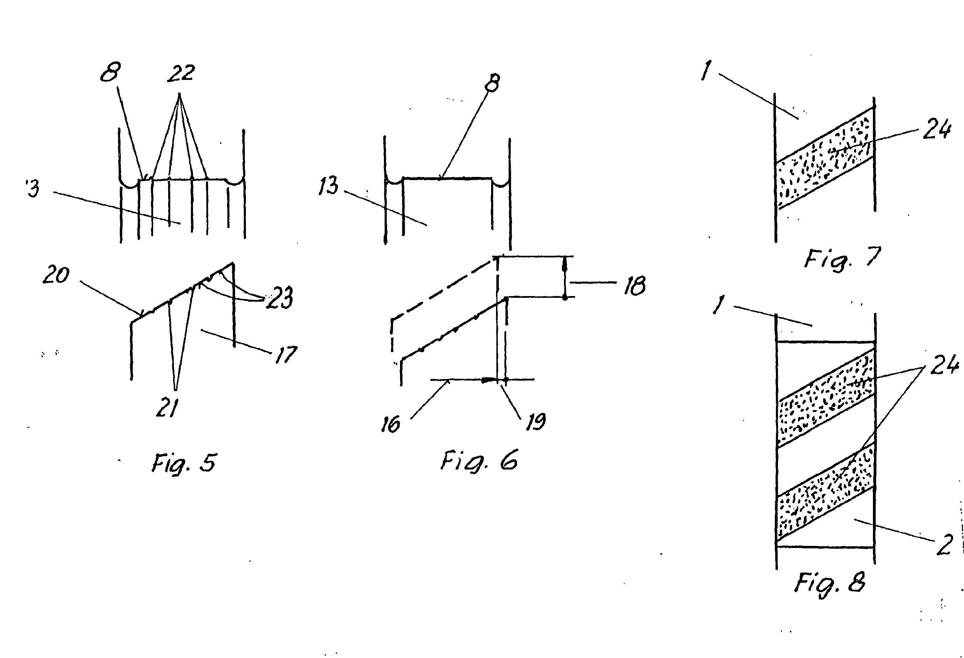

Anhand von Fig. 5 wird ein Problem beschrieben, das beim Bearbeiten von Werkstücken mittels Drehräumschneiden besteht, die unter einem axialen Winkel in den jeweiligen Werkzeughalter bzw. das jeweilige Werkzeug eingebaut sind. Wird mit einer solchen Drehräumschneide 17 das Werkstück 13 im Drehräumverfahren bearbeitet, ergibt sich in bekannter Weise eine konvexe Zylinderform. Aus diesem Grunde wird dem tangentialen Vorschub 18 (Fig. 6) der Drehräumschneide 17 eine radiale lineare Bewegung des Werkzeuges zum Werkstück 13 hin und vom Werkstück weg überlagert, um eine gerade Mantellinie der erzeugten Zylinderfläche zu erhalten.

Bei der Bearbeitung entstehen an der Schneidkante 20 kleine Ausbrüche 21, die bei fortschreitendem Verschleiß der Schneide 17 vergrößert werden. Die Schneidkante 20 wird dadurch schartig. Aufgrund dieser Schartigkeit bilden sich an der zu bearbeitenden Werkstückfläche 8 Überhöhungen 22 (Fig. 5). Wird das Werkstück 13 für eine Weiterbearbeitung auf dieser Fläche 8 zum Beispiel in Prismen aufgelegt, ergeben sich Lagefehler des Werkstükkes 13 entsprechend der unterschiedlichen Größe dieser Überhöhungen 22. Für eine erforderliche lagegenaue Weiterbearbeitung des Werkstückes 13, wobei die Werkstückfläche 8 als Basis dient, sind diese Überhöhungen 22 sehr nachteilig, da Lageunterschiede durch den Schneidenzustand entstehen.

Um diese Überhöhungen 22 trotz der Ausbrüche 21 an der Schneidenkante 20 zu vermeiden, wird der tangentialen Vorschubbewegung 18 der Schneide 17 beim Drehräumvorgang eine axiale Korrekturbewegung 19 (Fig. 6) der Schneide 17 überlagert. Aufgrund dieser axialen Korrekturbewegung 19, die parallel zur Achse 16 des Werkstückes 13 erfolgt, gelangen noch intakte Schneidkantenbereiche 23 (Fig. 5) in den Bereich der durch die Ausbrüche 21 gebildeten Überhöhungen 22, die durch die intakten Schneidkantenbereiche 23 abgetragen werden.

Aufgrund dieser axialen Korrekturbewegung, die der tangentialen Vorschubbewegung beim Drehräumen überlagert wird, ergibt sich eine hohe Oberflächenqualität auch dann, wenn die Schneidenkante 20 infolge Verschleißes die Ausbrüche 21 aufweist. Aufgrund dieser Korrekturbewegung kann die Schneide 17 entsprechend lang eingesetzt werden und muß nicht schon bei Auftreten der ersten Aufsbrüche 21 an der Schneidenkante 20 gewechselt werden.

Anhand der Fig. 7 und 8 wird eine weitere Möglichkeit beschrieben, wie eine hohe Oberflächenqualität bei der Bearbeitung von Werkstücken erreicht werden kann. Der vorzugsweise scheibenförmige Werkzeugträger ist am Umfang mit Schneidkörpern 24 versehen, die unter einem Achswinkel angeordnet sein können. Diese Schneidkörper 24 können unmittelbar am Umfang des Werkzeugträgers 1 angeordnet sein. Es ist aber auch möglich, die Schneidkörper 24 in einem Werkzeughalter 2 vorzusehen, der am Umfang des Werkzeugträgers 1 in bekannter Weise befestigt wird. Der Werkzeughalter 2 kann hierbei, wie Fig. 8 beispielhaft zeigt, zwei Schneidkörper 24 aufweisen. Darüber hinaus ist es selbstverständlich möglich, am Werkzeughalter 2 auch weitere Schneidkörper 24 vorzusehen. Am Umfang des Werkzeugträgers 1 sind in diesem Falle mehrere Werkzeughalter 2 angeordnet.

Der Schneidkörper 24 kann aus CBN, aus Siliziumcarbid, aus Korund oder einem ähnlichen Werkstoff bestehen. Der Schneidkörper 24 kann aber auch lediglich eine Beschichtung aus einem derartigen Material aufweisen, die auf einem geeigneten Träger aufgebracht ist. Der Schneidkörper 24 bildet somit einen Schleifkörper, mit dem eine hohe Oberflächenqualität am Werkstück sowie eine hohe Genauigkeitskonstanz in bezug auf die jeweiligen Durchmesser der rotationssymmetrischen Werkstückfläche 8 erreicht werden kann. Diese Genauigkeitskonstanz ist größer als bei Einsatz der herkömmlichen Drehräumwerkzeuge mit Schneiden.

Wenn die Schneidkörper 24, wie in den Fig. 7 und 8 dargestellt, unter einem Achswinkel am Werkzeugträger 1 bzw. am Werkzeughalter 2 angeordnet sind, kann das entsprechende Werkstück 13, das in den Fig. 7 und 8 nicht dargestellt ist, durch eine radiale tangentiale Vorschubbewegung des vorzugsweise kreisförmigen Werkzeugträgers 1 das um seine Achse rotierende Werkstück am Umfang bearbeiten. Auf diese Weise wird das Werkstück 13 im Räumschleifverfahren bearbeitet, bei dem sowohl das Werkzeug als auch das Werkstück um ihre zueinander parallelen Achsen rotieren. Das Werkstück 13 rotiert hierbei mit Schnittgeschwindigkeit, während die Vorschubgeschwindigkeit durch das Werkzeug mit den Schneid/Schleifkörpern 24 ausgeführt wird. Der Schleifkörper 24 bzw. das Werkzeug kann während der radialen tangentialen Vorschubbewegung in axialer Richtung in intermittierende Bewegungen versetzt werden. Solche intermittierende Bewegungen in axialer Richtung können auch erfolgen, ohne daß eine radiale tangentiale Vorschubbewegung erfolgt.

Vorteilhaft sind am Umfang des Werkzeugträgers mehrere Schleifkörper 24 auswechselbar befestigt. Die Schleifkörper 24 können selbstverständlich auch parallel zur Achse des Werkzeuges angeordnet sein. Der Schleifkörper 24 kann in diesem Fall an seiner zur Bearbeitungsstelle am Werkstück zeigenden Oberseite eine Balligkeit aufweisen.

Die Bearbeitung des Werkstückes kann durch ein- oder mehrmaliges Vor- und/oder Rückwärtsbewegen des Werkzeuges relativ zum Werkstück mit dazwischen erfolgenden Zustellbewegungen des Werkzeuges gegen das Werkstück erfolgen. Auf diese Weise kann der gewünschte Durchmesser am Werkstück 13 erzeugt werden.

Die letzte Vorschubbewegung des Werkzeuges kann ohne eine radiale tangentiale Zustellung des Werkzeuges gegen das Werkstück erfolgen. Das Werkzeug 1 bleibt dann stehen, während das Werkstück 13 noch mindestens eine Umdrehung ausführt. Hierbei werden Vorspannungen des Werkstückes, welche durch die Schnittkräfte während des Räumschleifens entstanden sind, eliminiert.

Wenn die Schneid/Schleifkörper 24 unter einem Achswinkel angeordnet sind, wird der tangentialen Vorschubbewegung des Werkzeuges 1 eine radiale lineare Korrekturbewegung überlagert, um eine gerade Mantellinie der rotationssymmetrischen Werkstückfläche zu erreichen.

Wenn bei den beschriebenen verschiedenen Ausführungsbeispielen von einer Zustellung des Werkzeuges die Rede ist, wird hierunter auch eine radiale Zustellung des Werkstückes in Richtung auf das Werkzeug sowie eine beiderseitige, gegeneinander gerichtete Bewegung von Werkzeug und Werkstück verstanden.

## Patentansprüche

1. Verfahren zum Bearbeiten von rotationssymmetrischen Werkstückflächen (8), vorzugsweise von Zylinderflächen, an Kurbelwellen, Nokkenwellen und dergleichen, bei dem die Werkstückfläche (8) mit einem Werkzeug (1) durch Drehräumen bearbeitet wird, wobei Werkzeug (1) und Werkstück um zueinander parallele Achsen drehen und eine Drehräumschneide (17) eine quer zur Achse des Werkstückes gerichtete Bewegungskomponente aufweist,
**dadurch gekennzeichnet, daß** der infolge der Drehbewegung des Werkzeuges (1) sich ergebenden tangentialen Vorschubbewegung (18) der Drehräumschneide (17) eine in Achsrichtung des Werkstükkes erfolgende Korrekturbewegung (19) der Drehräumschneide (17) überlagert wird.

2. Verfahren nach Anspruch 1,
**dadurch gekennzeichnet, daß** der tangentialen Vorschubbewegung (18) der Drehräumschneide (17) eine radiale lineare Korrekturbewegung überlagert wird.

3. Verfahren nach Anspruch 1 oder 2,
**dadurch gekennzeichnet, daß** die axiale Korrekturbewegung (19) nur in einer Achsrichtung, vorzugsweise hin- und hergehend, erfolgt.

## Claims

1. Working method for machining of rotationally symmetric workpiece surfaces (8), preferably cylindrical surfaces of crankshafts, camshafts and the like in which the work surface (8) is machined by a tool (1) by turn-broaching, whereby the tool (1) and the workpiece rotate around axis parallel to one another and a turn-broaching edge (17) comprises a moving component directed transversely to the axis of the workpiece, **characterized in that** the tangential feed motion (18) of the turn-broaching edge, resulting from the rotative movement of the tool (1), is superimposed by a correction movement (19) of the turn-broaching edge (17), taking place in the direction of the axis of the workpiece.

2. Working method according to claim 1,
**characterized in that** the tangential feed motion (18) of the turn-broaching edge (17) is superimposed by a radial linear correction movement.

3. Working method according to claim 1 or 2,
**characterized in that** the axial correction movement (19) occurs only in one direction of axis, preferably in a reciprocating manner.

## Revendications

1. Méthode de travail pour l'usinage des surfaces symétriques rotatives de pièces à usiner (8), de préférence de surfaces cylindriques à vilebrequins, arbres à cames et autres, par laquelle la surface de la pièce (8) est usinée par un outil (1) au moyen de tournage-brochage, l'outil (1) et la pièce tournant autour des axes parallèles l'un à l'autre et une lame de coupe de tournage-brochage (17) comprenant un composant du mouvement, dirigé transversalement par rapport à l'axe de la pièce à usiner, **caracterisée en ce que** l'avancement tangentiel (18) de la lame de coupe de tournage-brochage (17), résultant par suite du mouvement rotatif de l'outil (1) est superposé par un mouvement de correctif (19) de la lame de coupe de tournage-brochage (17), ayant lieu dans la direction de l'axe de la pièce.

2. Méthode selon revendication 1,
**caracterisée en ce que** l'avancement tangentiel (18) de la lame de coupe de tournage-brochage (17) est superposé par un mouvement correctif radial linéaire.

3. Méthode selon revendication 1 ou 2,
**caracterisée en ce que** le mouvement correctif radial (19) a lieu seulement dans une direction d'axe, de préférence en va-et-vient.
